(19) Europäisches Patentamt
European Patent Office
Office européen des brevets

(11) Publication number: 0 281 696 B1

(12) EUROPEAN PATENT SPECIFICATION

(45) Date of publication of patent specification: 02.01.92 (51) Int. Cl.[5]: C01B 3/04

(21) Application number: 87302127.3

(22) Date of filing: 12.03.87

# (54) A process for the photocatalytic decomposition of water into hydrogen and oxygen.

(43) Date of publication of application:
14.09.88 Bulletin 88/37

(45) Publication of the grant of the patent:
02.01.92 Bulletin 92/01

(84) Designated Contracting States:
AT DE FR GB

(56) References cited:
GB-A- 2 060 702

HELVETICA CHIMICA ACTA, vol. 64, fasc. 1, no. 35, 4th February 1981, pages 362-366, Basel CH; K KALYANASUNDARAM et al.: "Visible light induced water cleavage in CdS dispersion loaded with Pt and RuO2, hole scavenging by RuO2"

CHEMICAL ABSTRACTS, vol. 103, no.8 August 1985, page 162, abstract no. 56674k Columbus, Ohio, US; N. SERPONE et al.: "Photosensitization of semiconductors with transition metal complexes - a route to the photoassisted cleavage of water"

(73) Proprietor: Council of Scientific and Industrial Research
Rafi Marg
New Delhi 110 001(IN)

(72) Inventor: Khan, Mizra Mohammad Taqui
Central Salt & Marine Chemicals Research Institute
Bhavnagar §Gujarat(IN)
Inventor: Bhardwaj, Ramesh Chandra
Central Salt & Marine Chemicals Research Institute
Bhavnagar §Gujarat(IN)
Inventor: Bhardwaj, Chhaya
Central Salt & Marine Chemicals Research Institute
Bhavnagar §Gujarat(IN)

(74) Representative: Moon, Donald Keith et al
BREWER & SON Quality House Quality Court
Chancery Lane
London WC2A 1HT(GB)

EP 0 281 696 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to the photocatlytic decomposition of water into hydrogen and oxygen and to the production of a semiconductor therefor.

Hydrogen is one of the products of this invention which is simultaneously produced with oxygen and this has never been achieved before. Uses of these products are very well known. For example, hydrogen is used for the hydrogenation of essential oils, in fuel cells and is also considered to be the fuel of the future on depletion of fossil fuel whereas oxygen, apart from it being an important element for the survival of living beings, has multifarious uses includidng oxidation reactions.

At present, hydrogen is produced by the electrolysis of water but this is a slow process and consumes electrical energy. Gratzel et al reported the production of hydrogen from water but the biggest drawback in this system has been that it uses EDTA (Ethylene diamine tetraacetic acid) as a sacrificial electron donor and is consumed in the system. Not only is the photodecomposition system incomplete but it also does not produce oxygen.

In this process, the CdS semiconductor is light absorbing species. On illumination it absorbs light and this light energy is utilised to transfer an electron from the valence band of the semiconductor to the conduction band. The transfer of electron from the valence band to the conduction band leaves a positive charge in the valence band. The electron of the conduction band is transferred to water via Pt giving hydrogen. The hole in the valence band receives an electron from EDTA (Ethylene diamine tetra-acetic acid) dissolved in water through $RuO_2$ filling the gap which was created by jump of the electron to the conduction band. This cycle continues as long as the system is illuminated and the EDTA in solution decomposes. So the EDTA acts as the sacrificial electron donor and hydrogen is produced at the cost of EDTA. Nitrogen is used to create inert atmosphere in the cell.

The following are the drawbacks in the known system:

(a) It is not a complete cycle for photodecomposition of water and only hydrogen is produced and no oxygen.

(b) The hydrogen is generated at the cost of EDTA.

(c) Yield of hydrogen is very low.

All the aforesaid drawbacks have been overcome by the process according to the present invention which, being the cheapest, not only produces hydrogen but also oxygen using solar energy without, however, consuming fossil fuel, EDTA or electrical energy. The process is a completely free photocatalytic photodecomposition of water where nothing is consumed except water and solar energy.

The ideal method which we have developed for obtaining hydrogen from water has to be the simultaneous oxidation and reduction of water in which the water itself acts as an electron donor and gives oxygen on the one hand and on the other it (water) acts as an electron receiver where it gets reduced to give hydrogen and the energy consumed is Solar energy.

The main object of the present invention is to provide a process for the photodecomposition of water to get hydrogen and oxygen using solar energy.

Another object of the invention is to provide a method for the production of a semi-conductor.

It is observed that when colloidal semiconductor loaded with noble metal and the transition metal oxide suspended in aqueous solution of dioxygen complex of Ru-EDTA is subject to solar illumination, the electrons and positive charge are created in the semiconductor. The electron in the conduction band of the semiconductor is received by water through noble metal producing hydrogen and $OH^-$ ions according to the following equations:

$$CdS \xrightarrow{h\nu} CdS\,(h^+) + (e^-)$$

$$H_2O + e^- \longrightarrow 1/2\ H_2 + OH^-$$

The electron goes to the conduction band and a positive charge is left in the valence band. This valence band receives electrons from the peroxoy species of dioxygen complex and the vacancy created i.e. hole, by electron group by illumination is filled again.

The peroxocomplex after giving electron to the positive charge gets converted to superoxo species. The superoxo species of dioxygen complex receives electron from $OH^-$ resulting in the process liberating oxygen and gets converted back to peroxo species. The same cycle is repeated and $H_2$ and $O_2$ are generated from water.

The following are the equations :

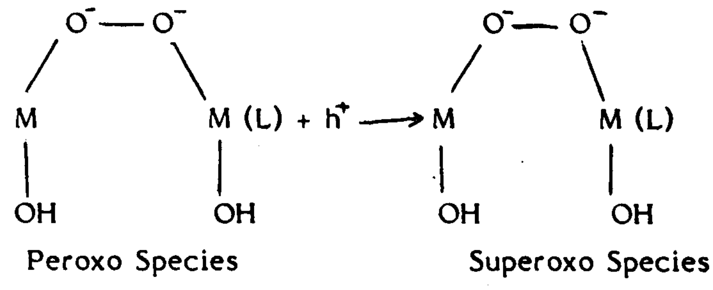


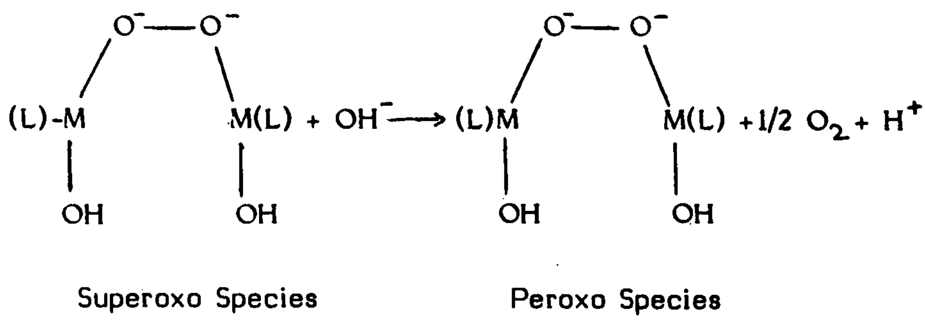


"M" is a metal which can be Ruthenium and L can be
Ethylene diamine tetra-acetic acid (EDTA),
Hydroxyl ethyl ethylenediamine tetra-acetic acid (HEDTA),
Cyclohexane diamine tetra-acetic acid (CDTA), or
1,2-diaminopropane N,N,N',N'-tetra-acetic acid (PDTA)

The CdS may be replaced by ZnS, Cd $Zn_xS$ wherein x is a numeral which can be operated in visible light and $TiO_2$, $BaTiO_3$ which can be operated under ultraviolet light.

An aqueous solution of dioxygen complex is kept in a pyrex cell. The semiconductor loaded with noble metal and transition metal oxides is suspended in this solution and light is passed through the system under inert atmosphere. The semiconductor employed may be CdS, ZnS, $Cd_xZn_xS$ or CdS doped with $Ag_2S$, $TiO_2$ or $BaTiO_3$. The noble metal employed may be Pt, Rh, Ir,. The dioxygen complex may be of the type [{ Ru (L) $(OH)_2$ } $O_2$] where L may be EDTA, HEDTA, CDTA or PDTA. The light used is solar light which can be visible if CdS, ZnS, $Cd_xZn_xS$ or CdS doped $Ag_2S$ is used and can be ultraviolet if $TiO_2$ or $BaTiO_3$ are used. The inert gas employed may be Nitrogen or Argon. The pyrex cell has an inlet to pass inert gas and an outlet from where hydrogen and oxygen are collected.

The semiconductor acts as light absorbing species. The noble metal acts as electron transferring catalyst while the $RuO_2$ acts as the positive charge scavanger where the dioxygen complex acts as electron relay between the OH ions and semiconductor. The system under illumination produces $H_2$ and $O_2$ in course of time.

The CdS, ZnS or $Cd_xZn_xS$ available in the market will not work. Only hexagonal crystal structure of semiconductor is suitable which is obtained by precipitation of the semiconductor eg CdS, and annealing it at temperatures ranging from 300 ° C - 500 ° C.

The complex [{ Ru (L) $(OH)_2$} $O_2$] K is prepared at a specific pH which should not be either highly acidic or basic pH. The addition of noble metal directly to semiconductor is not effective in the production of $H_2$ and $O_2$ from water under illumination even if all the other contents are added in the system.

Thus, the following procedure is adopted in the production and loading of the semiconductor according to the invention.

(1)Preparation of [{Ru (L) $(OH)_2$} $O_2$]K

This complex is prepared by first preparing Ru (EDTA) Cl K.

The complex $K_2RuCl_5(H_2O)$ is dissolved in a minimum amount of $HClO_4$ (dilute) and added to a hot solution of $Na_2(H_2EDTA)$ dissolved in the requisite volume of $HClO_4$. The mixture is refluxed for two hours. The light yellow solution is filtered and filtrate is evaporated to a small volume on a water bath and treated

with ethanol and cooled overnight. The light yellow complex is washed with a cooled mixture of acetone and water preferably 9:10, till it is free from chloride ion. It is dried in a desicator.

This yellow complex is dissolved in water and pH of the solution is adjusted to 6.5 to 8.0 by addition of NaOH. Oxygen gas is passed through this solution for half an hour. The yellow solution turns to green indicating the formation of $[\{Ru\ (L)\ (OH)_2\}\ O_2]$ K complex.

(2)Preparation of Semiconductor

1 litre of concentrated solution of $Cd(CH_3COO)_2.2H_2O$ or $Zn(CH_3COO)_2.2H_2O$ and 1 litre of concentrated solution of $(NH_4)_2S$ are thoroughly mixed together by a magnetic stirrer at room temperature.

The stirred suspension is brought to boiling point for about 10 minutes. The suspension is allowed to settle for about 24 hours and is subsequently decanted. The precipitate is collected by filtration and dried.

(3)Loading Rh on Semiconductor

An aqueous solution of $RhCl_3$. $3H_2O$ is added to a suspension of semiconductor and the mixture is stirred for about 30 minutes whereafter the mixture is irradiated in a pyrex cell. The mixture is stored preferably for about 5 hours. The suspended solid becomes yellowish grey during photochemical deposition. The catalyst is centrifuged and dried under vacuum at room temperature.

(4)Platinum Loading on Semiconductor

Requisite quantity of semiconductor powder is added to a dilute acetic acid solution inferred at pH 4.5 containing 6 gms of $H_2PtCl_6.xH_2O$ and 5 ml of 5% $Cd(NO_3)_2.4H_2O$ solution. After ultrasonic stirring the resultant suspension is introduced into a pyrex cell. At a constant temperature the vigorously stirred suspension is deaerated with argon for about 30 minutes and subsequently irradiated for about 30-60 minutes. The photocatalyst is then filtered and dried at about 60°C.

Loading $RuO_2$ on Semiconductor

Loading of $RuO_2$ on semiconductor/noble metal is carried out by dispersing requisite quantity of loaded semiconductor with noble metal in solution of dilute $RuO_4$. The dispersion was illuminated with visible light for about 30-60 minutes to bring out decomposition of $RuO_4$.

$RuO_4$-----------$RuO_2$ + $O_2$

The resultant $RuO_2$ precipitates as ultrafine layer into loaded semiconductor. The hydrogen and oxygen are produced for 60 hrs when the sytem was illuminated with visible light. The loaded semiconductor and the dioxygen complex is recovered after 60 hrs of operation.

According to the present invention there is provided a process for the photocatalytic decomposition of water into hydrogen and oxygen which comprises loading a semiconductor having a hexagonal crystal structure, with a noble metal and a transition metal oxide, suspending the loaded semiconductor in an aqueous solution of dioxygen complex of rhuthenium passing light under inert atmosphere and separating the hydrogen and oxygen so formed.

The invention will now be illustrated by the following Examples but are not be construed as a limitation to the scope of the invention.

**Example -1**

50 mg of loaded semiconductor with noble metal and $RuO_2$ is suspended in 25 ml solution of peroxospecies of dioxygen complex in a pyrex cell. The pH of the solution is maintained at which dioxygen complex is stable. The suspension is magnetically stirred and inert gas like argon or nitrogen is passed for 1/2 an hour. The cell is illuminated by visible light of 505 nm with intensity of 70 mw/cm.

The hydrogen and oxygen generated in the course of time is measured using manometer and analysed by gas chromatograph.

**Example -2**

50 mg of $CdS/Rh/RuO_2$ is suspended in 25 ml solution of [{Ru (EDTA) $(OH)_2${$O_2$] K $(0.1m)^2$ in a pyrex cell. The pH of the solution is maintained at 7.6 by addition of 0.1 M NaOH. The suspension is stirred and illuminated after passing $N_2$ gas for 1/2 an hour. The hydrogen and oxygen generated and the results of $H_2$ and $O_2$ are shown in Fig.1(a) and Fig.2(a) of the drawings accompanying this specification.

**Example -3**

50 mg of $CdS/Pt/RuO_2$ was suspended in 25-30 ml solution of [ { Ru (EDTA) $(OH)_2${$O_2$] K in a pyrex cell at pH 7.6. The suspension was stirred and nitrogen was passed for 1/2 an hour. The cell when illuminated gave hydrogen and Oxygen and the results are shown in Fig.1(b) and Fig.2(b) of the drawings.

**Example -4**

This experiment was done similar to examples 1 and 2 except that CdS was loaded with Ir. 50 mg $CdS/Ir/RuO_2$ was suspended in solution of dioxygen complex and irradiated at pH 7.6 - 8.00. The results are shown in Fig.1(c) of the drawings.

**Claims**

1. A process for the photocatalytic decomposition of water into hydrogen and oxygen which comprises loading a semiconductor with a noble metal and a transition metal oxide, suspending the loaded semiconductor in an aqueous solution of dioxygen complex of rhuthenium, passing light under inert atmosphere and separating the hydrogen and oxygen so formed, said semiconductor having been prepared by precipitating the semiconductor material and annealing it at a temperature ranging from 300-350 °C so that it has a hexagonal crystal structure,

2. A process as claimed in claim 1 wherein the dioxygen complex of rhuthenium is of the type [{Ru (L) $(OH)_2$} $O_2$] wherein L is selected from EDTA, HEDTA, CDTA and PDTA.

3. A process as claimed in any of the preceding claims wherein the semiconductor material employed is selected from CdS, ZnS, $Cd_xZn_xS$ wherein x is a numeral and CdS doped with $Ag_2S$ or $Tio_2$, $BaTiO_3$.

4. A process is claimed in any of the preceding claims wherein the noble metal is selected from Pt, Rh, Ir.

5. A process as claimed in any of the preceding claims wherein the transition metal oxide is selected from $RuO_2$ and osmium tetraoxide.

6. A process as claimed in any of the preceding claims wherein the complex has been prepared by first preparing [{ Ru (L) $(OH)_2$} $O_2$] K by dissolving complex $K_2$ Ru $Cl_5$ ($H_2O$) in minimum amount of $HClO_4$ (dilute) and adding to hot solution of $Na_2$ ($H_2L$) dissolved in $HClO_4$, refluxing the mixture, filtering and heating the filtrate with ethanol and adjusting the pH to 7.5 to 8.0 and passing oxygen.

7. A process as claimed in any of the preceding claims wherein the loading of rhuthenium to the semiconductor is done by stirring the mixture and thereafter irradiating in a pyrex cell.

8. A process as claimed in any of the preceding claims wherein the light used is solar light.

9. A process as claimed in claim 8 wherein the solar light is visible when the semiconductor material CdS, ZnS, $Cd_xZn_xS$ and CdS is doped with $Ag_2S$.

10. A process as claimed in any of claims 1-7 wherein the light is ultraviolet light when the semiconductor material is doped with $TiO_2$ or $BaTiO_3$.

11. A process as claimed in any of the preceding claims wherein the inert atmosphere is created by nitrogen or argon.

**Revendications**

1. Procédé pour la décomposition photocatalytique d'eau en hydrogène et oxygène, comprenant la charge d'un semi-conducteur avec un métal noble et un oxyde de métal de transition, la mise en suspension du semi-conducteur chargé dans une solution aqueuse de complexe dioxygéné de ruthénium, le passage de lumière sous atmosphère inerte et la séparation de l'hydrogène et de l'oxygène ainsi formés, ledit semi-conducteur ayant été préparé par précipitation du matériau semi-conducteur et recuit de celui-ci à une température allant de 300 à 350 °C, de manière qu'il ait une structure cristalline hexagonale.

2. Procédé selon la revendication 1, dans lequel le complexe dioxygéné de ruthénium est du type [{Ru-(L)$(OH)_2$}$O_2$], L étant choisi parmi l'EDTA, le HEDTA, le CDTA et le PDTA.

3. Procédé selon l'une quelconque des revendications précédentes, dans lequel le matériau semi-conducteur utilisé est choisi parmi Cds, ZnS, $Cd_xZn_xS$, x étant un nombre, et CdS dopé avec $Ag_2S$ ou $TiO_2$, $BaTiO_3$.

4. Procédé selon l'une quelconque des revendications précédentes, dans lequel le métal noble est choisi parmi Pt, Rh, Ir.

5. Procédé selon l'une quelconque des revendications précédentes, dans lequel l'oxyde de métal de transition est choisi parmi $RuO_2$ et le tétroxyde d'osmium.

6. Procédé selon l'une quelconque des revendications précédentes, dans lequel le complexe a été préparé d'abord par préparation de [{Ru(L)$(OH)_2$}$O_2$]K par dissolution du complexe $K_2RuCl_5(H_2O)$ dans une quantité minimale de $HClO_4$ (dilué) et addition à la solution chaude de $Na_2(H_2L)$ dissous dans $HClO_4$, chauffage au reflux du mélange, filtration et chauffage du filtrat avec de l'éthanol, puis ajustement du pH à 7,5-8,0 et passage d'oxygène.

7. Procédé selon l'une quelconque des revendications précédentes, dans lequel l'application de ruthénium sur le semi-conducteur est effectuée par agitation du mélange et ensuite irradiation dans une cellule en Pyrex.

8. Procédé selon l'une quelconque des revendications précédentes, dans lequel la lumière utilisée est la lumière solaire.

9. Procédé selon la revendication 8, dans lequel la lumière solaire est la lumière visible lorsque le matériau semi-conducteur est CdS, ZnS, $Cd_xZn_xS$ ou CdS dopé avec $Ag_2S$.

10. Procédé selon l'une quelconque des revendications 1 à 7, dans lequel la lumière est la lumière ultraviolette lorsque le matériau semi-conducteur est dopé avec $TiO_2$ ou $BaTiO_3$.

11. Procédé selon l'une quelconque des revendications précédentes, dans lequel l'atmosphère inerte est créée par de l'azote ou de l'argon.

**Patentansprüche**

1. Verfahren zum fotokatalytischen Zerlegen von Wasser in Wasserstoff und Sauerstoff, bei dem ein Halbleiter mit einem Edelmetall und einem Übergangsmetalloxid beladen wird, der beladene Halbleiter in einer wässrigen Lösung eines Disauerstoffkomplexes mit Rhuthenium suspendiert wird, Licht unter einer inerten Athosphäre hindurchgelassen wird und der auf diese Weise gebildete Sauerstoff und Wasserstoff getrennt werden, wobei der Halbleiter durch Präzipitieren des Halbleitermaterials und Tempern bei einer Temperatur im Bereich zwischen 300 ° C und 350 ° C erzeugt wird, so daß er eine hexagonale Kristallstruktur erhält.

2. Verfahren nach Anspruch 1, bei dem der Disauerstoffkomplex mit Rhuthenium von der Art [{Ru (L) (OH)} $O_2$ ] ist, wobei L aus den Stoffen EDTA, HEDTA, CDTA und PDTA ausgewählt ist.

3. Verfahren nach einem der vorhergehenden Ansprüche, bei dem das verwendete Halbleitermaterial aus den Stoffen CdS, ZnS, $Cd_xZn_xS$ oder $TiO_2$, $BaTiO_3$ ausgewählt ist, wobei x eine Zahl und CdS mit

$Ag_2S$ dotiert ist.

4. Verfahren nach einem der vorhergehenden Ansprüche, bei dem das Edelmetall aus den Stoffen Pt, Rh, Ir ausgewählt ist.

5. Verfahren nach einem der vorhergehenden Ansprüche, bei dem das Übergangsmetalloxid aus den Stoffen $RuO_2$ und Osmiumtetraoxid ausgewählt ist.

6. Verfahren nach einem der vorhergehenden Ansprüche, bei dem der Komplex bereitet wird, indem zunächst durch Lösen des Komplexes $K_2Ru\ Cl_5\ (H_2O)$ in einer minimalen Menge von $HCLO_4$ (wässrig) $[\{ Ru\ (L)\ (OH)_2 \} O_2]$ K bereitet wird und der heißen Lösung von $Na_2\ (H_2L)$ gelöst in $HClO_4$ zugegeben wird, die Mischung unter Rücklaufkühlung erhitzt, gefiltert und das Filtrat mit Äthanol erhitzt wird, wobei der Ph-Wert auf einen Wert zwischen 7,5 und 8 eingestellt und Sauerstoff hindurchgelassen wird.

7. Verfahren nach einem der vorhergehenden Ansprüche, bei dem das Beladen des Halbleiters mit Rhuthenium durch Rühren der Mischung und anschließendes Bestrahlen in einer Pyrexzelle erfolgt.

8. Verfahren nach einem der vorhergehenden Ansprüche, bei dem das verwendete Licht Sonnenlicht ist.

9. Verfahren nach Anspruch 8, bei dem das Sonnenlicht sichtbares Licht ist, wenn das Halbleitermaterial CdS, ZnS, $Cd_xZn_xS$ und mit $Ag_2S$ dotiertes CdS ist.

10. Verfahren nach einem der Ansprüche 1 bis 7, bei dem das Licht ultraviolettes Licht ist, wenn das Halbleitermaterial mit $TiO_2$ oder $BaTiO_3$ dotiert ist.

11. Verfahren nach einem der vorhergehenden Ansprüche, bei dem die inerte Atmosphäre durch Stickstoff oder Argon gebildet ist.

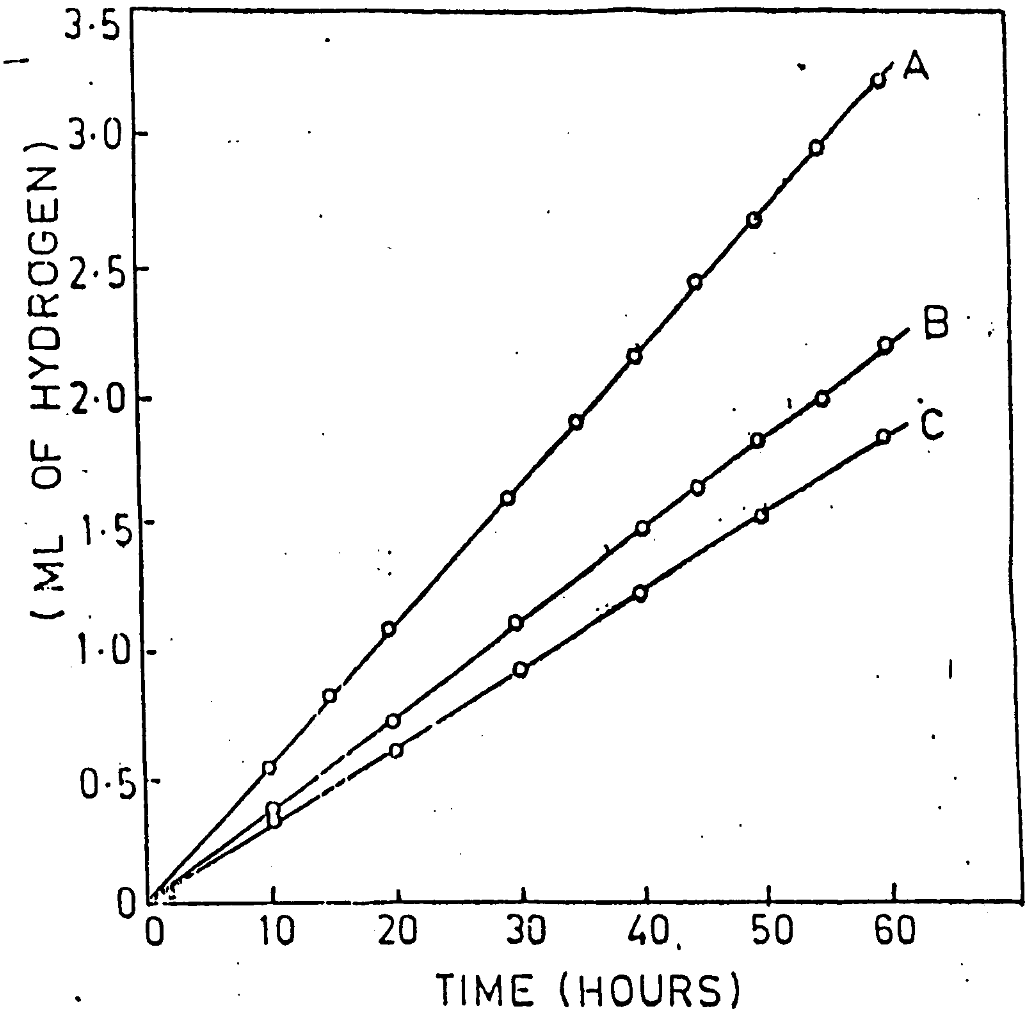


**Figure 1.** Rate of hydrogen production from water under illumination by visible light **(A)** CdS/Rh/$RuO_2$B **(B)**CdS/Pt/$RuO_2$ **(C)** CdS/Ir/$RuO_2$ in presence of [{Ru(OH)(edta)}$_2$($O_2$)]

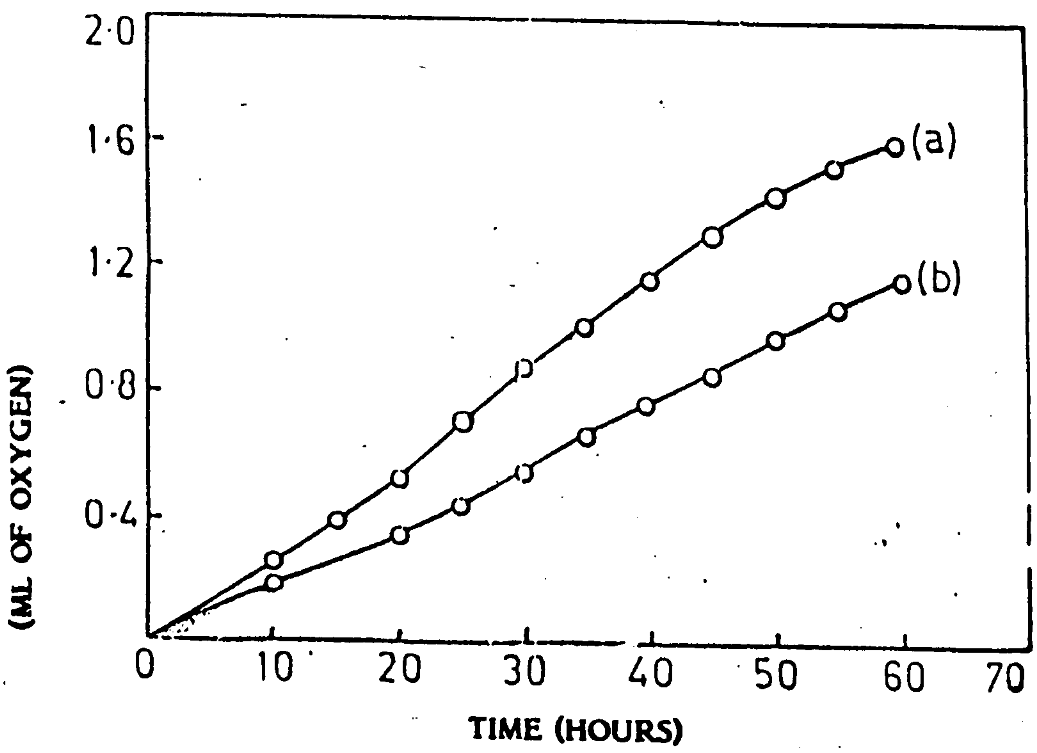


**Figure 2.** Rate of oxgen production from water under illumination by visible light. (A) CdS/Rh/$RuO_2$ and (B) CdS/Pt/$RuO_2$ in the presence of $[\{Ru(OH_2)(edta)\}_2(O_2)]$